# EUROPÄISCHE PATENTANMELDUNG

(11) **EP 3 300 554 A1**
(43) Veröffentlichungstag der Anmeldung: **04.04.2018**
(21) Anmeldenummer: 17401091.8
(22) Anmeldetag: 24.08.2017
(51) Int. Cl.: A01B 23/02, A01B 35/06, A01C 5/06

(54) **LANDWIRTSCHAFTLICHE MASCHINE**

(30) Priorität: 30.09.2016 DE 102016118564
(71) Anmelder: Amazonen-Werke H. Dreyer GmbH & Co. KG, 49205 Hasbergen (DE)
(72) Erfinder: Tanke, Christian, 01723 Kesselsdorf (DE); Bohlen, Eike, 28215 Bremen (DE); Westermann, Andre, 27777 Ganderkesee (DE)

(57) **Zusammenfassung**

Landwirtschaftliche Maschine, insbesondere Sämaschine oder dergleichen, mit zumindest einem Scharstriegel, der mehrere beabstandet nebeneinander angeordnete Striegelemente (10.1,10.2), die jeweils zumindest zwei über den Boden führbares und/oder in den Boden eingreifende und zueinander beabstandete Striegelzinken (10.3,10.4) aufweisen, wobei das jeweilige Striegelement (10.1,10.2) von einem sich von seiner Befestigungsstelle am Schar (1) oder einem sich quer zur Fahrtrichtung erstreckenden Querbalken gehalten ist, wobei die Striegelzinken auf der der Befestigungsstelle benachbarten Bereich durch zumindest einen Quersteg miteinander verbunden sind. Um ein vereinfachtes und verbessert ausgestaltetes Striegelelement (10.2), insbesondere für den Randbereich landwirtschaftlicher Maschinen, insbesondere Sämaschinen zu schaffen, ist vorgesehen, dass zumindest ein Striegelelement (10.2) drei beabstandet zueinander angeordnete Striegelzinken (10.3,10.4) aufweist.

## Beschreibung

Die Erfindung betrifft eine landwirtschaftliche Maschine gemäß des Oberbegriffes des Patentanspruches 1.

Eine derartige landwirtschaftliche Maschine ist in DE 10 2008 045 635 A1 beschrieben. Bei dieser Maschine ist jedem Säschar ein zweizinkiges Striegelelement zugeordnet. Insbesondere im Randbereich der Maschine ist diese Anordnung und Ausgestaltung nicht immer zufriedenstellend.

Auch sind landwirtschaftliche Maschinen bekannt, bei denen im Randbereich nur ein einzinkiges Striegelelement angeordnet ist. Hierfür muss dann jeweils auch für das einzinkige Striegelelement eine eigene Halterung zur Befestigung vorgesehen werden. Dieses aufwändig und teuer.

Der Erfindung liegt die Aufgabe zu Grunde, ein vereinfachtes und verbessert ausgestaltetes Striegelelement, insbesondere für den Randbereich landwirtschaftlicher Maschinen, insbesondere Sämaschinen zu schaffen.

Diese Aufgabe wird erfindungsgemäß dadurch gelöst, dass zumindest ein Striegelelement drei beabstandet zueinander angeordnete Striegelzinken aufweist.

Infolge dieser Maßnahme ergibt sich in einfacher Weise eine erhebliche Kosten- und Gewichtsreduzierung für die im Randbereich angeordneten Striegelelemente. Es werden hier im Hinblick auf bekannte Lösungen mit nebeneinander angeordneten einzinkigen und zweizinkingen Striegelelement ein erfindungsgemäßes dreizinkiges Striegelement geschaffen, welches drei Striegelzinken aufweist, es ergibt sich bildlich gesprochen ein "Dreizack",

Eine einfache und kostengünstige sowie gewichtsoptimierte Ausgestaltung eines drei Striegelzinken aufweisenden Striegelelementes lässt sich in einfacher Weise dadurch schaffen, dass das Striegelelement mit drei beabstandet zueinander angeordneten Striegelzinken ein U-förmiges Grundstriegelelement mit zwei beabstandet angeordneten und mit ihren freien Enden in Richtung des Bodens weisenden Striegelzinken aufweist, dass zwischen diesen beiden beabstandet zueinander angeordneten Striegelzinken des Grundstriegelelementes zumindest annähernd mittig ein weiterer Striegelzinken als dritter Striegelzinken des Striegelelementes mittels Schraub- und/oder Klemmelementen angeordnet ist.

Eine einfache Anordnung des zusätzlichen Striegelzinkens an einem zweizinkigen Striegelelement kann dadurch erreicht werden, dass der weitere Striegelzinken an seinem oberen Ende ein rechtwinklig abgebogenes winkelförmiges Befestigungselement aufweist, dass über das rechtwinklig abgebogene winkelförmige Befestigungselement mittels der Schraub- und/oder Klemmelementen der weitere Striegelzinken an dem Grundstriegelelement angeordnet ist.

Eine vorteilhafte Anordnung des Striegelelementes wird dadurch erreicht, dass an dem Querbalken des Scharstriegel oder dem jeweils äußeren und/oder im jeweils äußeren Bereich angeordneten Säschar jeweils als äußeres Striegelelement ein drei Striegelzinken aufweisendes Striegelelement angeordnet ist.

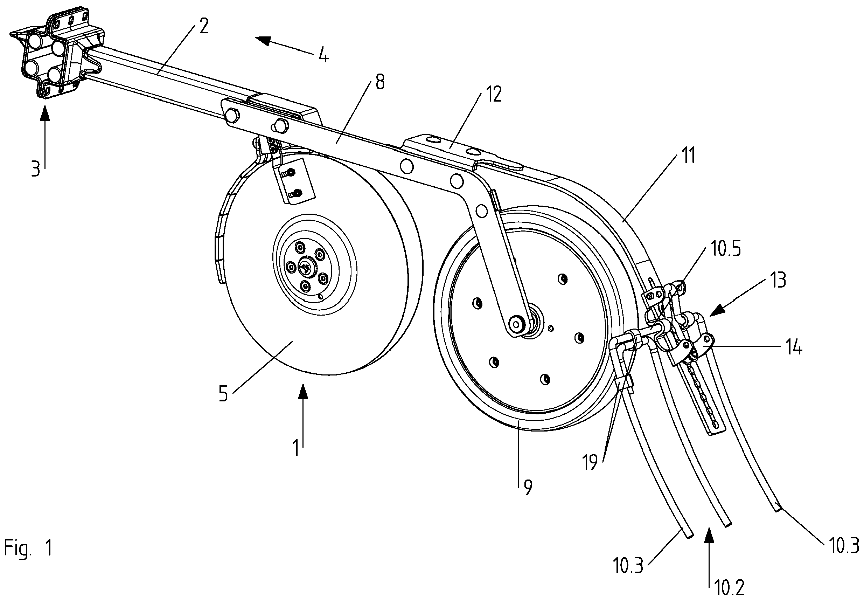

Weitere Einzelheiten der Erfindung sind der Beispielsbeschreibung und den Zeichnungen zu entnehmen. Die Zeichnungen zeigen
- Fig.1: ein Säschar mit zugeordnetem sich in Betriebsstellung befindlichem erfindungsgemäßen Striegelelement einer landwirtschaftlichen Maschine in perspektivischer Darstellung,
- Fig.2: das sich in Betriebsstellung befindliche Striegelelement in perspektivischer Darstellung, jedoch aus anderer Sichtweise,
- Fig.3: das sich in Außerbetriebsstellung befindliche Striegelelement in perspektivischer Darstellung nach Fig.2 und
- Fig.4: die Zuordnung der Striegelemente zu Säscharen einer als Sämaschine ausgebildeten landwirtschaftlichen Maschine in perspektivischer Darstellung, wobei nur ein Teilbereich der Schar- und Striegelanordnung auf der in Fahrtrichtung linken Seite der Maschine dargestellt ist.

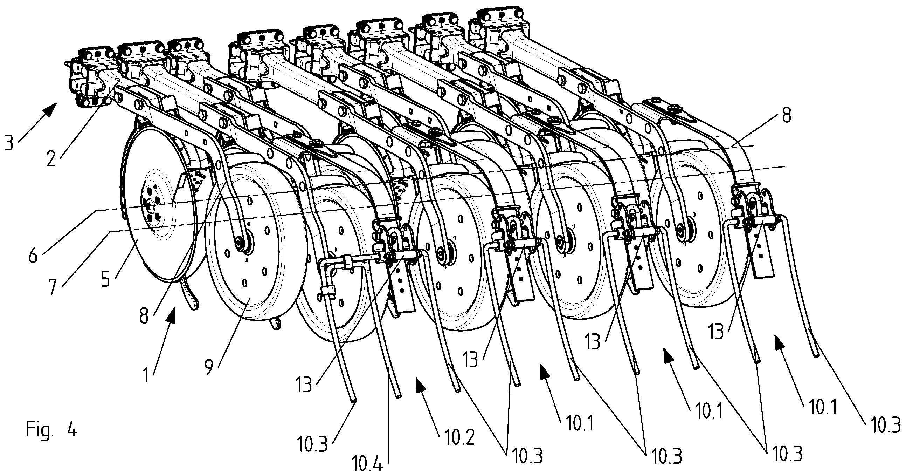

Das Säschar 1 ist über den Scharhalter 2 und das Gelenk 3 an einem nicht dargestellten Querbalken einer landwirtschaftlichen Maschine, die beispielsweise als Bodenbearbeitungsgerät oder Sämaschine ausgebildet ist, in aufrechter Ebene bewegbar angeordnet. Das Säschar 1 weist im Ausführungsbeispiel zwei drehbar angeordnete und schräg zur Fahrtrichtung 4 angestellte Scharscheiben 5 auf. Die Säschare 1 sind, wie Fig.4 zeigt in zwei Querreihen 6 und 7 hintereinander bestandet und auf Lücke zueinander angeordnet. Hinter jedem Säschar 1 ist über einen Tragarm 8 an dem Scharhalter 2 eine Tiefenführungs- und/oder Andruckrolle 9 angeordnet. An den Säscharen 1 und hinter den Rollen 9 in der hinteren Querreihe 7 ist jeweils ein zinkenförmiges über dem Boden führbares und/oder in den Boden eingreifende Striegelelemente 10.1 bzw. 10.2 angeordnet. Diese Striegelelemente 10.1 bzw. 10.2 sind an einem Striegelhalter 11 befestigt. Dieser Striegelhalter 11 erstreckt sich jeweils von seiner Befestigungsstelle 12 am Schar 1 bzw. Scharhalter 2 oder Tragarm 8 nach hinten.

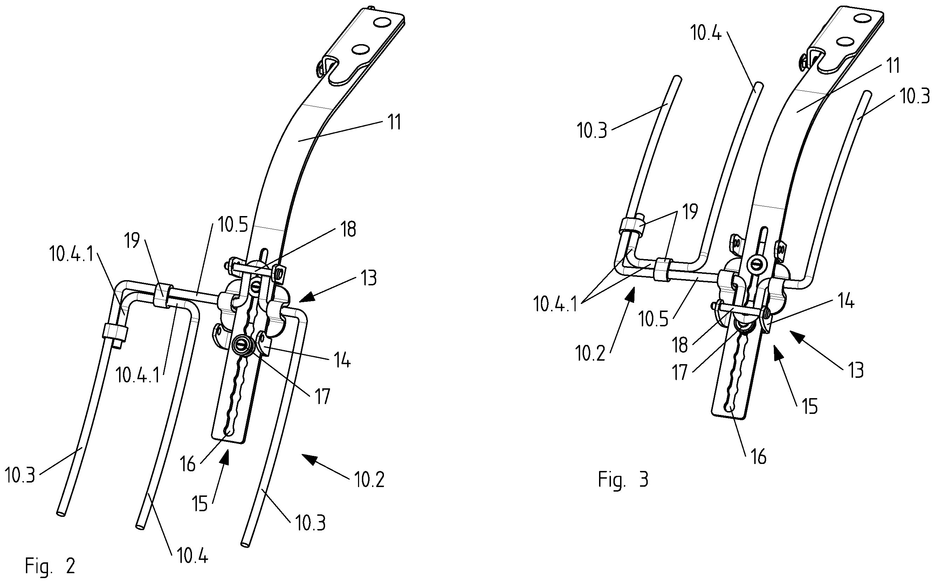

Die Striegelelemente 10.1 bzw. 10.2 sind mit einer Gelenkanordnung 13, die eine Lasche 14 aufweist, an dem Striegelhalter 11 befestigt. Im Befestigungsbereich 15 der Lasche 14 weist der Striegelhalter 11 eine Rastkulisse, die als längliche schlitzförmige Aussparung 16 mit mehreren beabstandet zueinander angeordneten Rastaussparungen ausgebildet ist, auf. Die Lasche 14 mit Gelenkanordnung 13 und dem Striegelelement 10.1 bzw. 10.2 ist gegenüber dem Striegelhalter 11 zur Einstellung des Striegelelementes 10.1 bzw. 10.2 verschiebbar. Der Lasche 14 ist ein verschiebbarer Rastbolzen 17 zugeordnet. Der Rastbolzen 17 weist einen ersten Bereich mit auf die Form und Größe der Aussparungen abgestimmte Ausgestaltung auf. Hieran schließt sich ein zweiter Bereich an, der eine geringere Abmessung, abgestimmt auf die Breite der schlitzförmigen Aussparung 16, aufweist. Des Weiteren ist dem Rastbolzen 17 ein federndes Element zugeordnet, welches so auf dem Rastbolzen 17 angeordnet ist, dass der Rastbolzen 17 das Bestreben hat, den ersten Bereich in die Aussparung der schlitzförmigen Aussparung 16 zu bewegen und dort zu halten. Durch das Eingreifen des Rastbolzens 17 in die Rastaussparungen wird die Lasche 14 mit der Gelenkanordnung 13 gegenüber dem Striegelhalter 11 in der eingestellten Position arretiert. Durch die Anordnung über die Gelenkanordnung 13 können die Striegelelemente 10.1 bzw. 10.2 wahlweise in die in Fig.2 dargestellte Arbeitsstellung oder in die in Fig.3 dargestellte Außerbetriebsstellung verbracht und mittels des Absteckbolzens 18 entsprechend arretiert werden.

Die Striegelemente 10.1 bzw. 10.2 weisen ein U-förmiges Grundstriegelelement mit zwei beabstandet angeordneten und mit ihren freien Enden in Richtung des Bodens weisenden Striegelzinken 10.3 auf. Das jeweils äußere Striegelelement 10.2, welches im jeweilgen Randbereich der Maschine angeordnet ist weist drei beabstandet zueinander angeordnete Striegelzinken 10.3 und 10.4 auf. Die übrigen zwischen den beiden jeweils im Randbereich der Maschine angeordneten Striegelelemente 10.1 weisen zwei beabstandet zueinander angeordnete Striegelzinken 10.3 auf.

Im Ausführungsbeispiel sind die als Randzinken ausgebildeten Striegelelemente 10.2 einem im jeweils äußeren Bereich angeordneten Säschar 1, hier dem äußersten Säschar der hinteren Querreihe 7 angeordnet. Dieses jeweils äußerte Striegelelement 10.2 ist als ein drei Striegelzinken 10.3 und 10.4 aufweisendes Striegelelement ausgestaltet.

Das sogenannte Randstriegelelement 10.2 mit den drei beabstandet zueinander angeordneten Striegelzinken 10.3 und 10.4 weist ein U-förmiges Grundstriegelelement mit zwei beabstandet zueinander angeordneten und mit ihren freien Enden in Richtung des Bodens weisenden Striegelzinken 10.3 auf. Diese beiden Striegelzinken 10.3 sind über einen Quersteg 10.5 miteinander verbunden, so dass die U-förmige Grundform des Striegelelementes 10.2 geschaffen wird. Über den Quersteg 10.5 ist das Strielelemnet mit der Lasche 14 verbunden und hierüber an dem Tragarm 11 befestigt und somit mit dem Säschar verbunden. Zwischen diesen beiden beabstandet zueinander angeordneten Striegelzinken 10.3 des Grundstriegelelementes ist mittig ein weiterer Striegelzinken 10.4 als dritter Striegelzinken des Striegelelementes 10.2 mittels Klemmelementen 19 angeordnet ist. Eine Befestigung mit Schraubelementen, auch in Verbindung mit Klemmelementen ist möglich.

Der weitere Striegelzinken 10.4 weist an seinem oberen Ende ein rechtwinklig abgebogenes winkelförmiges Befestigungselement 10.4.1 auf. Über dieses rechtwinklig abgebogene winkelförmige Befestigungselement 10.4.1 ist der weitere Striegelzinken an dem Grundstriegelelement 10.3 und 10.4 mittels der Klemmelemente 19 angeordnet.

In nicht dargestellter Weise können die Striegelelemente des Scharstriegels auch an einem am Rahmen der Maschine befestigten Querbalken angeordnet sein.

## Patentansprüche

1. Landwirtschaftliche Maschine, insbesondere Sämaschine oder dergleichen, mit zumindest einem Scharstriegel, der mehrere beabstandet nebeneinander angeordnete Striegelemente 10.1,10.2, die jeweils zumindest zwei über den Boden führbares und/oder in den Boden eingreifende und zueinander beabstandete Striegelzinken 10.3,10.4 aufweisen, wobei das jeweilige Striegelement 10.1,10.2 von einem sich von seiner Befestigungsstelle am Schar 1 oder einem sich quer zur Fahrtrichtung 4 erstreckenden Querbalken gehalten ist, wobei die Striegelzinken auf der der Befestigungsstelle benachbarten Bereich durch zumindest einen Quersteg miteinander verbunden sind, **dadurch gekennzeichnet, dass** zumindest ein Striegelelement 10.2 drei beabstandet zueinander angeordnete Striegelzinken 10.3,10.4 aufweist.

2. Landwirtschaftliche Maschine nach Anspruch 1, **dadurch gekennzeichnet, dass** das Striegelelement 10.2 mit drei beabstandet zueinander angeordneten Striegelzinken 10.3,10.4 ein U-förmiges Grundstriegelelement mit zwei beabstandet angeordneten und mit ihren freien Enden in Richtung des Bodens weisenden Striegelzinken 10.3 aufweist, dass zwischen diesen beiden beabstandet zueinander angeordneten Striegelzinken 10.3 des Grundstriegelelementes zumindest annähernd mittig ein weiterer Striegelzinken als dritter Striegelzinken 10.4 des Striegelelementes 10.2 mittels Schraub- und/oder Klemmelementen angeordnet ist.

3. Landwirtschaftliche Maschine nach zumindest einem der vorstehenden Ansprüche, **dadurch gekennzeichnet, dass** der weitere Striegelzinken 10.4 an seinem oberen Ende ein rechtwinklig abgebogenes winkelförmiges Befestigungselement 10.5 aufweist, dass über das rechtwinklig abgebogene winkelförmige Befestigungselement 10.5 mittels der Schraub- und/oder Klemmelementen 19 der weitere Striegelzinken 10.4 an dem Grundstriegelelement angeordnet ist.

4. Landwirtschaftliche Maschine nach zumindest einem der vorstehenden Ansprüche, **dadurch gekennzeichnet, dass** an dem Querbalken des Scharstriegel oder dem jeweils äußeren und/oder im jeweils äußeren Bereich angeordneten Säschar 1 jeweils als äußeres Striegelelement 10.2 ein drei Striegelzinken 10.3,10.4 aufweisendes Striegelelement angeordnet ist.
